# FASCICULE DE BREVET EUROPEEN

(11) **EP 3 534 347 B1**
(45) Date de publication et mention de la délivrance du brevet: **28.10.2020**
(21) Numéro de dépôt: 19158890.4
(22) Date de dépôt: 22.02.2019
(51) Int. Cl.: G08C 17/02

(54) **DISPOSITIF POUR TÉLÉCOMMANDER UN APPAREIL**
VORRICHTUNG ZUM FERNSTEUERUNG EINER EINRICHTUNG
DEVICE FOR REMOTE CONTROLLING AN APPARATUS

(30) Priorité: 02.03.2018 FR 1851820
(43) Date de publication de la demande: 04.09.2019
(73) Titulaire: ORANGE, 75015 Paris (FR)
(72) Inventeur: GAILLET, Thierry, 92330 Sceaux (FR); LEROUX, Sylvain, 75020 Paris (FR)
(74) Mandataire: Plasseraud IP

(56) Documents cités:
- US-A1- 2007 229 465
- US-B2- 9 414 125

## Description

La présente invention concerne un dispositif pour télécommander au moins un appareil, et de préférence un tel dispositif qui peut posséder une fonction de télécommande universelle.

Les particuliers et les entreprises ont des besoins croissants de contrôle d'appareils qui sont installés dans des locaux variés, tels que des locaux d'habitation ou des locaux d'activité. Ces appareils sont par exemple des volets roulants, des robots domestiques, des systèmes d'éclairage, des systèmes de chauffage, des systèmes de ventilation, des systèmes de surveillance ou de sécurité, etc. Ils peuvent appartenir au secteur domotique ou au secteur d'activité économique du local. Généralement, de tels appareils peuvent être contrôlés par des télécommandes séparées qui sont dédiées à chacun d'eux, ou par des applications qui sont accessibles sur téléphones intelligents, appelés «smartphones» en anglais, ou sur des tablettes.

Or l'ensemble des télécommandes et applications qui sont nécessaires pour tous les appareils d'un même local peut être important en nombre, de sorte que l'utilisation de certaines de ces télécommandes ou applications devient source de confusion, et nécessite que l'utilisateur consulte des notices dont chacune est spécifique à l'un des appareils. Des pertes de temps importantes en résultent.

A partir de cette situation, il existe donc un besoin pour qu'un utilisateur puisse télécommander facilement et rapidement une multiplicité d'appareils.

Ce besoin concerne plus particulièrement une télécommande commune qui soit compatible avec des appareils multiples.

Les publications US2007/0229465 et US 9,414,125 proposent déjà des solutions répondant partiellement à ce problème.

Pour répondre à ce besoin ou un autre, selon un premier aspect, un dispositif est proposé, qui est destiné à télécommander au moins un fonctionnement d'au moins un appareil, et qui comprend :
- un processeur, qui est couplé de manière opérationnelle à une mémoire, et qui est adapté pour déterminer une instruction de commande de l'appareil sur la base d'une combinaison de plusieurs éléments d'instruction de commande affichés sur une face du dispositif, par configuration de parties différentes de la face sur lesquelles sont respectivement inscrits les éléments d'instruction de commande, ces parties différentes de la face étant juxtaposées dans la face pour former la combinaison des éléments d'instruction de commande ;
- un module d'inscription, qui est adapté pour inscrire, sous contrôle du processeur, les éléments d'instruction de commande sur les parties respectives de la face du dispositif ;
- un module d'interface d'entrée, qui est adapté pour recevoir des entrées d'un utilisateur, ce module d'interface d'entrée comprenant un module de détection adapté pour détecter une activation de l'instruction de commande de l'appareil par un utilisateur ; et
- un module de communication, qui est adapté pour envoyer à une plateforme de gestion par l'intermédiaire d'un réseau de communication, des données qui représentent l'instruction de commande activée par l'utilisateur.

Le fonctionnement de l'appareil peut alors être contrôlé conformément à l'instruction de commande qui a été activée par l'utilisateur, à partir des données qui représentaient cette instruction de commande telles qu'elles ont été transmises par le dispositif à la plateforme de gestion.

Ainsi, le dispositif de l'invention est adapté pour proposer des instructions de commande à l'utilisateur, et pour recevoir des activations effectuées par l'utilisateur de certaines de ces instructions de commande. Un tel dispositif est compatible avec un grand nombre d'appareils différents, et peut être partagé entre plusieurs appareils, notamment grâce à l'utilisation de la plateforme de gestion. Il peut ainsi remplacer des télécommandes multiples qui seraient dédiées séparément à ces appareils. En ce sens, le dispositif de l'invention peut remplir une fonction de télécommande universelle. Tous les appareils peuvent alors être télécommandés selon une même logique d'instruction, ce qui procure une facilité d'utilisation générale et un gain de temps important à l'utilisateur.

L'utilisation de la plateforme de gestion permet aussi de communiquer facilement avec les appareils à télécommander, notamment lorsque ces appareils sont connectés à des plateformes qui leur sont dédiées, à la façon qui est désignée communément par internet des objets, ou IoT pour «internet of things» en anglais. En outre, l'utilisation de ces plateformes dédiées aux appareils, en combinaison avec la plateforme de gestion et le dispositif de l'invention, permet d'utiliser facilement les enrichissements de fonctionnalités qui sont mises à disposition, via ces plateformes dédiées, par les fabricants ou les gestionnaires de ces appareils.

En outre, le module d'inscription permet de varier les éléments d'instructions de commande qui sont inscrits sur certaines au moins des parties de face du dispositif, par exemple en fonction des appareils qui sont destinés à être télécommandés au moyen du dispositif. De cette façon, la fonction de télécommande universelle du dispositif est encore augmentée.

Le module d'inscription, en coopération avec le processeur, peut aussi varier les éléments d'instructions de commande qui sont inscrits sur certaines au moins des parties de face du dispositif en fonction d'un contexte qui existe au moment de l'utilisation du dispositif. Ce contexte peut prendre en compte divers paramètres, tel que l'heure, la localisation, l'état actuel de certains des appareils, des résultats de mesures de conditions ambiantes, un apprentissage préalable d'habitudes de l'utilisateur, etc. Ainsi, la fonction de télécommande universelle du dispositif peut être combinée avec une fonction de contextualisation.

De façon générale pour l'invention, au moins un des éléments d'instructions de commande, qui est inscrit sur une des parties de la face du dispositif, peut être de type thème et désigner au moins un type d'appareil concerné par l'instruction de commande à laquelle participe cet élément d'instruction de commande. En outre, au moins un autre des éléments d'instructions de commande, qui est inscrit sur une autre des parties de la même face du dispositif, peut être de type action et désigner une commande de fonctionnement d'au moins un appareil du type qui est désigné par l'élément d'instruction de commande de type thème, au sein d'une même instruction de commande. Un tel mode de construction de chaque instruction de commande, par combinaison d'un élément d'instruction de commande du type thème avec un élément d'instruction de commande du type action, sans limitation par rapport à d'autres éléments d'instructions de commande supplémentaires qui pourraient participer en outre à former l'instruction de commande, est simple à appréhender par l'utilisateur et permet de mettre à disposition de l'utilisateur un grand nombre d'instructions de commande différentes. L'utilisation du dispositif est alors facile, intuitive et rapide.

Dans des modes préférés de réalisation, certaines au moins des parties de face du dispositif peuvent être munies d'afficheurs respectifs, ces afficheurs étant pilotés par le module d'inscription. Dans ce cas, le module de communication peut en outre être adapté pour recevoir, en provenance de la plateforme de gestion, des éléments d'instructions de commande qui sont disponibles pour être utilisés avec le dispositif. Alors, le module d'inscription peut en outre être adapté pour inscrire certains au moins des éléments d'instructions de commande disponibles et reçus sur certaines au moins des parties de face qui sont munies d'afficheurs, selon une affectation de ces éléments d'instructions de commande disponibles et reçus aux parties de face. De cette façon, le dispositif peut être plus simple, puisqu'une partie des données ou informations qui sont nécessaires à son fonctionnement est déterminée par la plateforme de gestion, et envoyée par celle-ci au dispositif. La complexité du dispositif, son coût ainsi que sa consommation énergétique peuvent être réduits de cette façon, puisque les tâches concernées, y compris les tâches de mémorisation, sont exécutées par la plateforme de gestion.

L'affectation des éléments d'instructions de commande aux parties de face du dispositif peut être déterminée par le dispositif lui-même. Toutefois, pour des modes préférés de réalisation à afficheurs, le module de communication peut être adapté en outre pour recevoir, de la part de la plateforme de gestion, des données qui spécifient l'affectation de chaque élément d'instruction de commande disponible et reçu à une des parties de face du dispositif. Alors, les données qui représentent l'instruction de commande activée par l'utilisateur, et qui sont renvoyées par le module de communication à la plateforme de gestion, peuvent comprendre une identification de certaines au moins des parties de face qui correspondent, selon l'affectation, aux éléments d'instruction de commande de l'instruction de commande qui a été activée par l'utilisateur. Ainsi, toute la gestion des éléments d'instructions de commande par rapport aux appareils à télécommander et/ou à un contexte d'utilisation du dispositif, peut être effectuée dans la plateforme de gestion, de sorte que le dispositif n'est plus qu'une interface d'affichage et d'entrée. Un tel dispositif peut alors être plus simple, et sa fonction de télécommande universelle peut être encore augmentée de cette façon par rapport aux appareils à télécommander.

Encore pour des modes de réalisation à afficheurs, le processeur peut être configuré en outre pour, dans un état de veille du dispositif, affecter certaines au moins des faces de ce dispositif à des appareils distincts ou des fonctions d'appareil distinctes, et pour commander au module d'inscription d'afficher sur l'une au moins des faces du dispositif au moins un parmi :
- un état de fonctionnement en cours de l'appareil auquel la face est affectée,
- un état d'activation en cours de la fonction d'appareil à laquelle la face est affectée,
- une valeur d'un paramètre qui est concerné par l'appareil auquel la face est affectée, ou qui est concerné par la fonction d'appareil à laquelle la face est affectée, et
- une information qui est relative à l'appareil auquel la face est affectée, ou qui est relative à la fonction d'appareil à laquelle la face est affectée.

De façon générale pour l'invention, le dispositif peut être configuré en outre pour permettre à l'utilisateur de commander un réglage ou une valeur d'un paramètre qui est applicable au dispositif, le dispositif apparaissant alors lui-même comme un appareil supplémentaire dont le fonctionnement est commandé au moyen de ce dispositif.

Dans des premiers modes de réalisation, le dispositif peut comprendre plusieurs faces qui sont affectées respectivement à des types d'appareil distincts, à des appareils distincts ou à des fonctions d'appareil distinctes. Alors, le dispositif peut en outre être configuré pour présenter à l'utilisateur sur au moins une de ces faces au moins une instruction de commande qui est relative au type d'appareil, à l'appareil ou la fonction d'appareil correspondant à cette face. Dans ce cas, le module d'interface d'entrée est adapté en outre pour permettre à l'utilisateur d'activer l'instruction de commande de cette face. Une telle affectation de une-à-un des faces du dispositif aux types d'appareil, appareils ou fonctions d'appareil rend le dispositif plus intuitif et plus facile à utiliser.

Préférablement, pour ces premiers modes de réalisation, le module de détection peut comprendre au moins un capteur, notamment un capteur tactile ou un capteur de pression, qui est disposé au niveau d'une des parties de face du dispositif sur laquelle partie de face est inscrit un des éléments d'instruction de commande. Ce capteur est alors adapté pour détecter une action d'activation de l'instruction de commande qui est effectuée par l'utilisateur. Sur détection de l'action d'activation, le capteur, en coopération avec le processeur, peut déclencher un envoi par le module de communication à la plateforme de gestion, des données qui représentent l'instruction de commande activée par l'utilisateur.

Préférablement pour les premiers modes de réalisation, le dispositif peut avoir une forme substantiellement cubique ou une forme de parallélépipède rectangle, avec six faces qui sont disponibles pour être affectées séparément à des types d'appareil distincts, des appareils distincts ou des fonctions d'appareil distinctes, concerné(e)s par les instructions de commande du dispositif.

Dans des seconds modes de réalisation, le dispositif peut comprendre plusieurs blocs dont l'un au moins est mobile par rapport à au moins un autre des blocs, et le bloc mobile peut comporter plusieurs faces qui forment chacune une partie de face distincte du dispositif. Alors, un déplacement, par l'utilisateur, du bloc mobile par rapport à au moins un autre des blocs du dispositif modifie celles des parties de face qui sont juxtaposées pour déterminer l'instruction de commande. Dans ce cas, le module d'interface d'entrée est adapté pour détecter les parties de face qui sont mises en juxtaposition par l'utilisateur pour sélectionner l'instruction de commande. De tels seconds modes de réalisation permettent à l'utilisateur de composer l'instruction de commande qu'il va activer, en déplaçant les blocs du dispositif pour sélectionner les éléments d'instruction de commande qu'il juxtapose.

Possiblement pour certains des seconds modes de réalisation, le dispositif peut être configuré en outre pour, sur détection que l'utilisateur a saisi le dispositif :
- identifier une face du dispositif, dite face active, que l'utilisateur présente pour modifier l'instruction de commande qui figure sur cette face active ; et
- inscrire sur au moins une partie de face qui n'appartient pas à la face active, mais qui est susceptible d'être amenée par l'utilisateur dans la face active par déplacement du bloc mobile, un élément d'instruction de commande qui est disponible pour être sélectionné par l'utilisateur en amenant dans la face active la partie de face sur laquelle est inscrit cet élément d'instruction de commande disponible.

De tels seconds modes de réalisation combinent une visualisation améliorée des éléments d'instructions de commande qui sont disponibles, pour faciliter l'opération de composition de celle de ces instructions de commande qu'il va activer.

Préférablement pour les seconds modes de réalisation, le dispositif peut être agencé de sorte que les blocs soient mobiles chacun par rapport à au moins un autre des blocs du dispositif par rotation autour d'un axe qui est commun à tous les blocs.

Possiblement encore pour certains des seconds modes de réalisation, un premier des blocs peut être dédié à afficher des éléments d'instructions de commande du type thème, et un second des blocs peut être dédié à afficher des éléments d'instructions de commande du type action.

Un second aspect de l'invention propose un procédé de télécommande d'un fonctionnement d'au moins un appareil, le procédé comprenant les étapes suivantes, exécutées au moyen d'un dispositif qui est conforme au premier aspect de l'invention :
/1/ établir une liaison de communication de données entre le dispositif et une plateforme de gestion ;
/2/ recevoir depuis la plateforme de gestion, des données de configuration de certaines au moins des parties de face du dispositif, en affectant des éléments d'instructions de commande à ces parties de face ;
/3/ inscrire les éléments d'instructions de commande sur les parties de face auxquelles ces éléments d'instructions de commande sont affectés ;
/4/ recevoir une entrée de la part d'un utilisateur, et activer une instruction de commande qui apparaît sur une face du dispositif, dite face active, sur la base de l'entrée d'utilisateur reçue ; et
/5/ envoyer à la plateforme de gestion des données qui représentent l'instruction de commande qui a été activée par l'utilisateur.

Dans un ou plusieurs modes de réalisation pour le(s)quel(s) le dispositif comporte des afficheurs sur certaines au moins de ses parties de face, le procédé peut comprendre en outre :
- recevoir, depuis la plateforme de gestion, les éléments d'instructions de commande à inscrire sur certaines au moins des parties de face qui sont munies d'afficheurs ;
- inscrire sur ces parties de face qui sont munies d'afficheurs, les éléments d'instructions de commande reçus de la plateforme de gestion ; et
- optionnellement, lorsqu'une utilisation en cours du dispositif est détectée, inscrire sur au moins une partie de face qui est dans la face active, ou qui est susceptible d'être amenée dans la face active par l'utilisateur, un élément d'instruction de commande qui est disponible en remplacement d'un autre élément d'instruction de commande inscrit préalablement sur une partie de face de la face active.

En outre, de façon générale pour l'invention, l'activation de l'instruction de commande qui apparaît sur la face active peut comprendre de déterminer une nouvelle instruction de commande à appliquer à l'appareil sur la base d'une détection d'une modification, par l'utilisateur, de la combinaison d'éléments d'instruction de commande qui apparaît sur la face active du dispositif. Dans ce cas, l'envoi à la plateforme de gestion des données qui représentent l'instruction de commande qui a été activée par l'utilisateur comprend d'envoyer à la plateforme de gestion, des données qui représentent les éléments d'instruction de commande de la nouvelle instruction de commande.

D'autres particularités et avantages de la présente invention apparaîtront dans la description ci-après d'exemples de réalisation non limitatifs, en référence aux dessins annexés, dans lesquels :
- la figure 1 est un diagramme synoptique des éléments nécessaires pour mettre en œuvre un dispositif selon un ou plusieurs modes de réalisation ;
- les figures 2a et 2b représentent deux modes de réalisation particuliers de dispositifs conformes à l'invention ; et
- la figure 3 montre des composants d'un dispositif conforme à l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

En outre, l'Homme du métier peut se rendre compte que les enseignements des présentes peuvent être mis en œuvre sous différentes formes selon différents modes de réalisation, et que les structures et/ou fonctions décrites ci-dessous ne représentent que certains modes de réalisation particuliers. En particulier, l'Homme du métier comprendra qu'un aspect des dispositifs, plateformes, appareils et procédés décrit dans les présentes peut être mis en œuvre indépendamment d'autres aspects, et que différents aspects peuvent être combinés de différentes manières.

La présente description fait référence à des fonctions, unités, modules, plateformes, et diagrammes des méthodes et dispositifs selon un ou plusieurs modes de réalisation. Chacun(e) des fonctions, unités, modules, plateformes, et diagrammes décrits peut être mis en œuvre sous forme matérielle, logicielle, y compris sous forme de logiciel embarqué, désigné par «firmware» en anglais, ou sous forme de «middleware», ou microcode, ou toute combinaison de ces derniers. Dans le cas d'une mise en œuvre sous forme logicielle, les fonctions, unités, modules et/ou diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support de stockage informatique», on entend tout support physique pouvant être accédé par ordinateur. Les exemples de support de stockage informatique incluent, de manière non limitative, les disques ou composants de mémoire flash ou tous autres dispositifs à mémoire flash, tels que par exemple des clés USB, des clés de mémoire, des sticks mémoire, des disques-clés, des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires, couramment désignées par «smart cards», des mémoires de type SSD, pour «Solid State Drive» en anglais, et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un équipement informatique, telles qu'un routeur, une passerelle, un serveur, ou tout module de communication, qu'il s'agisse de transmission filaire (par câble coaxial, fibre optique, fils téléphoniques, câble DSL, ou câble Ethernet), sans-fil (par infrarouge, radio, cellulaire, microondes), ou des modules de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans les présentes pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «plateforme» ou «serveur», on entend dans les présentes tout point de service, virtualisé ou non, ou dispositif opérant des traitements de données, une ou plusieurs bases de données, et/ou des fonctions de communication de données. Par exemple, et de manière non limitative, le terme «plateforme» ou le terme «serveur» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service, parfois appelées «boxes» ou «passerelles résidentielles», des décodeurs multimédia, parfois appelés «set-top boxes», des équipements intégrés combinant diverses fonctionnalités, telles que deux ou plus des fonctionnalités mentionnées ci-dessus. Les plateformes peuvent fortement varier dans leurs configurations ou leurs capacités, mais une plateforme inclura généralement une ou plusieurs unité(s) centrale(s) de traitement et une mémoire. Une plateforme peut aussi inclure un ou plusieurs équipement(s) de mémoire de masse, une ou plusieurs alimentation(s) électrique(s), une ou plusieurs interface(s) de réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans les présentes font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre une plateforme et un dispositif conforme à l'invention, ou d'autres types de dispositifs, y compris entre dispositifs sans fil couplés ou connectés par un réseau sans fil, par exemple. Un réseau peut aussi inclure une mémoire de masse pour stocker des données, tel qu'un NAS, pour «network attached storage» en anglais, un SAN, pour «storage area network» en anglais, ou toute autre forme de support lisible par un ordinateur ou par une machine, par exemple. Un réseau peut comprendre, en tout ou partie, le réseau Internet, un ou plusieurs réseaux locaux, ou LANs, pour «local area networks» en anglais, un ou plusieurs réseaux de type WAN, pour «wide area networks» en anglais, des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté», «en coopération» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans les présentes. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes «application» ou «programme applicatif» (AP) et leurs variantes («app», «webapp», etc.) tels qu'utilisés dans les présentes correspondent à tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec un programme applicatif, et le contrôler, une interface utilisateur peut être fournie sur l'équipement sur lequel le programme applicatif est mis en œuvre. Par exemple, une interface graphique, ou GUI pour «graphical user interface» en anglais, peut être générée et affichée sur un écran de l'équipement utilisateur, ou une interface utilisateur audio peut être restituée à l'utilisateur en utilisant un haut-parleur, un casque ou une sortie audio.

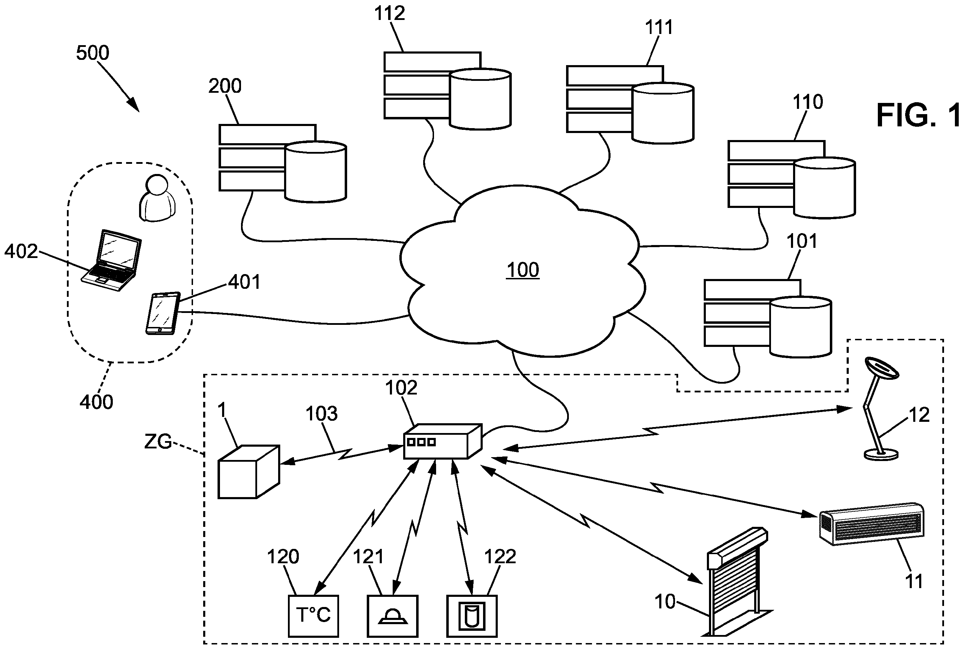

La figure 1 est un diagramme illustrant un mode de réalisation dans lequel un système 500 comprend un dispositif tel que proposé dans les présentes et désigné globalement par la référence 1, configuré pour communiquer avec une plateforme de gestion 101 par le biais d'un réseau ou plusieurs réseau(x) comprenant un réseau de communication 100, auquel une passerelle de service 102, ou «box», est connectée. Le dispositif 1 sera de préférence configuré pour que sa liaison de communication 103 avec la passerelle de service 102 soit de type sans-fil, par exemple en utilisant la technologie de communication de données WiFi®, ou la technologie Zigbee®, ou encore une technologie de communication sans-fil de type Bluetooth® (et notamment la technologie Bluetooth Low Energy®, ou BLE), ou Z-Wave® ou un protocole de communication de type IEEE 802.15.4. L'utilisation d'une connexion sans-fil sur le segment de communication qui aboutit au dispositif 1 permet en effet à un utilisateur de manipuler le dispositif 1 sans entrave.

En fonction du mode de réalisation, le dispositif 1 et la plateforme de gestion 101 peuvent être interconnectés et échanger des données sur une ou plusieurs liaison(s) de communication, en utilisant un ou plusieurs réseau(x) de différents types, tels qu'un réseau fixe, un réseau cellulaire (par exemple selon la norme 2G (GSM, GPRS, EDGE), 3G (UMTS), 4G (LTE), LTE-A, LTE-M, CDMA, CDMA2000, HSPA, 5G, ou leurs variantes ou évolutions), un autre type de réseau radio (par ex. WiFi® ou Bluetooth®), un réseau IP, une combinaison de plusieurs de ces réseaux, etc. Pour cela, le dispositif 1 et la plateforme de gestion 101 seront configurés avec des moyens de communication de données adaptés.

Un espace de ressources (traitement, mémoire, etc.) est ainsi affecté au dispositif 1 dans la plateforme de gestion 101. Dans le mode de réalisation illustré par la figure 1, la plateforme de gestion 101 est connectée au réseau 100, de façon à ce que des données puissent être transmises entre la plateforme 101 et le dispositif 1. Dans un ou plusieurs modes de réalisation, la plateforme de gestion 101 peut être hébergée par un ou plusieurs serveurs, par exemple au sein d'un cloud. Ce ou ces serveurs, qui peuvent être tout type d'équipement ou de système comprenant des moyens de traitement de données, tels qu'un ordinateur, un ensemble d'ordinateurs interconnectés (dans le cadre d'un réseau virtualisé par exemple), et comprendre et/ou être connectés à une ou plusieurs bases de données pour stocker des données, peuvent être configurés pour échanger des données avec un ou plusieurs dispositif(s) 1, et notamment recevoir d'un ou de plusieurs dispositif(s) des données représentant au moins une instruction de commande d'un fonctionnement d'au moins un appareil.

Dans un ou plusieurs modes de réalisation, la plateforme de gestion 101 peut être munie d'une interface de programmation applicative (en anglais, «Application Programming Interface», ou «API»), ou de tout autre type d'interface (non représentée sur la figure 1), configurée pour transmettre vers et recevoir des données depuis un ou plusieurs dispositif(s), et notamment recevoir des données représentant au moins une instruction de commande du fonctionnement d'au moins un appareil.

Dans un ou plusieurs modes de réalisation, le système 500 comprend un ou plusieurs appareil(s) ou objet(s), par exemple des appareils de domotique tels qu'un volet roulant 10, un climatiseur 11 et un lampadaire 12, qui sont cités à titre d'exemples (illustrés sur la figure 1) sans limitation quant à leur nature et leur nombre, qui peuvent être respectivement connectés à des plateformes dédiées de gestion d'objets connectés 110, 111, 112, par exemple au travers du réseau de communication 100, comme illustré sur la figure 1. La connexion de chacun des appareils ou objets connectés au réseau 100 peut aussi être réalisée par l'intermédiaire de la passerelle 102, mais pas nécessairement. Les appareils qui sont destinés à être commandés au moyen du dispositif 1, comprenant les appareils 10-12 à titre d'illustration, peuvent être situés dans ou à proximité d'une zone géographique limitée, notée ZG. Par exemple, une telle zone ZG peut être un local d'habitation. Il est entendu que bien que le dispositif 1 et le procédé pour télécommander un appareil, conformes à l'invention, soient décrits pour des appareils de domotique installés dans un local d'habitation, ils peuvent être mis en œuvre sans limitation avec tous types d'appareils.

Dans un ou plusieurs modes de réalisation, chaque plateforme dédiée, peut aussi être hébergée par un ou plusieurs serveurs, par exemple dans un cloud. Dans le mode de réalisation illustré par la figure 1, un espace de ressources (traitement, mémoire, etc.) est affecté dans la plateforme 110 au volet roulant 10, un espace dans la plateforme 111 est affecté au climatiseur 11, et un espace dans la plateforme 112 est affecté au lampadaire 12. Les plateformes 110-112 de gestion d'objets connectés peuvent être gérées par les fournisseurs respectifs des appareils 10, 11, 12, mais pas nécessairement. Chacune des plateformes 110-112 possède des données de fonctionnement de l'appareil correspondant, et peut communiquer avec lui par l'intermédiaire du réseau 100, notamment en utilisant des interfaces de programmation applicatives, ou APIs. En particulier, chacune des plateformes 110-112 peut être munie d'une API et de moyens de communication de données configurés pour communiquer avec l'appareil supervisé pour déclencher à distance un fonctionnement de l'appareil correspondant, pour communiquer à une autre plateforme des informations relatives à cet appareil, et pour communiquer des données avec la plateforme de gestion 101.

Le système 500 peut comprendre en outre des objets connectés générant des données, tels que des capteurs, comme par exemple le capteur de température 120, le capteur de luminosité 121, et le capteur de présence 122 illustrés sur la Figure 1, qui sont cités à titre d'exemples sans limitation quant à leur nature et leur nombre. Dans un ou plusieurs modes de réalisation, ces capteurs sont configurés pour transmettre des données à la plateforme de gestion 101, par exemple par le biais du réseau de communication 100, avec possiblement encore des espaces de ressources dédiés dans des plateformes (non-représentées). Le mode de connexion de chacun des capteurs au réseau de communication 100 peut varier en fonction du mode de réalisation et du capteur. Par exemple, les capteurs de température 120, de luminosité 121 et de présence 122 peuvent être reliés au réseau 100 par un réseau sans fil de type WPAN (de l'anglais «Wireless Personal Area Network») en utilisant une technologie de communication sans-fil de type Bluetooth® (et notamment la technologie Blutooth Low Energy®, ou BLE), Zigbee®, ou Z-Wave® ou un protocole de communication de type IEEE 802.15.4. Une fonction de surveillance de contenus qui sont susceptibles d'être gérés et/ou générés par un service en ligne, d'apparaître sur un réseau social ou sur le réseau Internet, et qui est exécutée par un terminal connecté au réseau de communication 100, peut aussi constituer un capteur au sens des présentes.

Le système 500 de la figure 1 peut comprendre un ensemble 400 d'équipements ou de fonctions utilisateur 401, 402, configurés pour fournir une interface utilisateur de gestion (comprenant notamment la configuration, le pilotage, l'utilisation, et la commande) du dispositif 1. Les utilisateurs, via leurs services en ligne (par exemple via leur réseau social), via leur(s) équipement(s) utilisateur, via des applis sur leur(s) smartphone(s) ou des Webapps, c'est-à-dire des applications exécutables à partir d'un navigateur, sur leur(s) ordinateur(s), et/ou leur(s) service(s) de messagerie, peuvent ainsi interagir avec le dispositif 1.

Dans un ou plusieurs modes de réalisation, l'équipement utilisateur 401, 402 peut être configuré pour communiquer par réseau sans-fil, par exemple de type WiFi®, avec la passerelle de service 102, pour échanger des données avec la plateforme de gestion 101. En fonction du mode de réalisation, une application configurée pour la gestion, comprenant notamment la configuration, le pilotage, l'utilisation, et la commande, d'un ou plusieurs dispositif(s) 1, encore appelée application compagnon, pourra être exécutée par l'équipement utilisateur 401, 402. L'application compagnon pourra comprendre une interface utilisateur pour les commandes utilisateur du (ou des) dispositif(s). L'équipement utilisateur 401, 402 est alors adapté pour la mise en œuvre de l'application compagnon, et comprend typiquement un écran, par exemple tactile, pour l'affichage d'une interface utilisateur graphique, ou GUI, pour «*Graphical User Interface*»*,* de l'application compagnon, un microphone pour l'enregistrement de commandes vocales et d'autres interfaces d'entrée configurées en fonction du mode de réalisation de l'application compagnon pour l'entrée de commandes utilisateur de l'application.

Dans un ou plusieurs modes de réalisation, l'équipement utilisateur 401, 402 peut comprendre une mémoire, une unité de traitement, équipée par exemple d'un processeur, et pilotée par une application, notamment l'application compagnon dédiée à la commande et/ou la configuration d'un ou plusieurs dispositif(s) 1, ou un programme d'ordinateur, configuré(e)(s) pour la mise en œuvre d'un ou plusieurs mode(s) de réalisation des procédés proposés.

A l'initialisation, les instructions de code du programme d'ordinateur sont par exemple chargées dans une mémoire RAM avant d'être exécutées par le processeur de l'unité de traitement. Le processeur de l'unité de traitement est configuré pour mettre en œuvre le procédé de commande selon au moins un mode de réalisation, selon les instructions du programme d'ordinateur, pour échanger avec la plateforme de gestion 101 des données afin de contrôler un ou plusieurs dispositif(s).

L'équipement utilisateur 401, 402 peut être un téléphone portable, par exemple un smartphone, une tablette, un ordinateur, un composant électronique, ou un autre appareil comportant un module de communication, un module interface utilisateur (comprenant par exemple un écran, un microphone, un haut-parleur, un clavier) et un processeur couplé de manière opérationnelle à une mémoire, ainsi que, selon le mode de réalisation choisi, d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire ou le support de stockage amovible contient des instructions qui, lorsqu'elles sont exécutées par l'unité de traitement, amènent cette unité de traitement à échanger des données avec la plateforme de gestion 101 selon au moins un mode de mise en œuvre du procédé de télécommande proposé.

En fonction du mode de réalisation, le module de pilotage du dispositif 1 dont est typiquement doté l'équipement utilisateur 401, 402, mis en œuvre par l'application compagnon comme décrit ci-dessus en lien avec un ou plusieurs modes de réalisation, pourra être configuré pour communiquer avec la plateforme de gestion 101, par exemple par l'intermédiaire du réseau 100. A l'inverse, dans un ou plusieurs modes de réalisation, la plateforme de gestion 101 pourra être munie d'une API configurée pour échanger des données avec un ou plusieurs dispositif(s) 1, par exemple des applications de configuration respectivement exécutées sur un ou plusieurs équipements utilisateur 401, 402.

Par exemple, l'équipement utilisateur 401, 402 peut être utilisé pour associer à un dispositif 1 un ou plusieurs appareil(s) qui est (sont) destiné(s) à être télécommandé(s) au moyen de ce dispositif 1. Des identifiants de ces appareils peuvent alors être mémorisés au sein de la plateforme de gestion 101 en liaison avec un identifiant du dispositif 1. Les appareils qui sont à associer ainsi au dispositif 1 peuvent être déclarés par une procédure automatique, notamment basée sur une géolocalisation de ces appareils, ou par l'utilisateur en sélectionnant ceux des appareils qu'il souhaite télécommander au moyen du dispositif 1.

Dans un ou plusieurs modes de réalisation, la configuration (configuration initiale ou reconfiguration) d'un dispositif 1 pourra être contrôlée par la plateforme de gestion 101, et des données de configuration mises en mémoire au sein de la plateforme de gestion 101, par exemple en lien avec un profil comprenant un identifiant et des données de configuration.

En fonction du mode de réalisation, un profil de configuration pourra être défini en lien avec un dispositif 1, ou être défini en lien avec un utilisateur ou un groupe d'utilisateurs, pour être appliqué à un ou plusieurs dispositif(s) 1. Le profil de configuration pourra contenir un ou plusieurs identifiant(s) de dispositif(s) 1 et/ou un identifiant d'utilisateur. Une hiérarchisation de différents profils pourra en outre être utilisée pour définir des niveaux d'accès à des fonctions de configuration d'un dispositif 1, et/ou des niveaux de priorité de configuration.

Par exemple, un utilisateur A ayant un profil plus élevé qu'un utilisateur B pourra avoir accès à un plus grand nombre de fonctionnalités de configuration que l'utilisateur B. Pour reprendre l'exemple de la figure 1, dans un contexte domestique comprenant des adultes et des enfants, les adultes pourront se définir un profil leur permettant de contrôler l'ensemble des fonctionnalités du dispositif 1, et notamment l'état de fonctionnement de l'ensemble des équipements ou appareils 10, 11, 12, tandis que les enfants pourront avoir un profil ne leur permettant que d'utiliser le lampadaire 12. Dans un contexte professionnel, un manager ou chef d'équipe pourra avoir un profil de configuration plus élevé que les membres de son équipe, et par ce biais pouvoir accéder à un plus grand nombre d'appareils et de fonctionnalités de configuration d'un ou plusieurs dispositif(s) 1.

La définition de profils associés à des dispositifs permet avantageusement de définir des niveaux hiérarchiques entre différents dispositifs, comme par exemple un niveau «maître» ou «administrateur», et un niveau «esclave» ou «standard». De tels niveaux hiérarchiques différents associés aux profils respectifs de dispositifs permettent avantageusement de piloter un ensemble de dispositifs par l'intermédiaire d'un seul de ceux-ci. Par exemple, pour un groupe de N dispositifs, il peut être avantageux de définir un profil «administrateur» pour l'un de ces N dispositifs, et un profil «standard» pour les N-1 autres dispositifs. Les différents niveaux définis dans les profils respectivement associés aux dispositifs peuvent par exemple avoir pour conséquence, par configuration, que les instructions de commande produites à partir du dispositif «administrateur» seront répercutées sur les dispositifs «standard», par l'intermédiaire de la plateforme de gestion 101.

Par exemple, sur réception de données d'une instruction de commande en provenance d'un dispositif parmi une pluralité de dispositifs, les dispositifs de la pluralité de dispositifs fonctionnant selon l'un des modes de réalisation décrit dans les présentes, la plateforme de gestion peut, dans un ou plusieurs modes de réalisation, être configurée pour récupérer le profil du dispositif ayant transmis les données, et déterminer un niveau hiérarchique associé à ce profil. Dans le cas où le niveau hiérarchique déterminé correspond à un niveau supérieur dans la hiérarchie des profils prédéfinie, la plateforme de gestion peut être configurée pour transmettre tout ou partie des données d'instruction de commande associées à ce dispositif aux autres dispositifs de la pluralité de dispositifs ayant un niveau hiérarchique associé à leur profil qui est inférieur au niveau hiérarchique du dispositif dont provient l'instruction de commande. Ce procédé permet avantageusement de préempter en tout ou partie le fonctionnement de dispositifs d'une pluralité dispositifs par définition de niveaux hiérarchiques associés à un profil, par le biais d'un ou plusieurs dispositif(s) au(x)quel(s) un niveau supérieur (dénommé par exemple «master» ou «administrateur») dans la hiérarchie a été associé.

Dans un ou plusieurs modes de réalisation, un dispositif auquel est associé un profil d'un premier niveau dans une hiérarchie de profils prédéfinie, peut être piloté, et en particulier recevoir des instructions de commande, de différentes manières : depuis un dispositif auquel est associé un profil d'un deuxième niveau supérieur au premier niveau dans la hiérarchie prédéfinie, et depuis une application exécutée sur un équipement utilisateur, comme décrit dans les présentes, dans les deux cas par l'intermédiaire de la plateforme de gestion.

Le système 500 illustré sur la figure 1 peut comprendre en outre une ou plusieurs plateforme(s) externe(s) 200, par exemple de type serveur de données, ou «data server», «data lake» ou «data sets» en anglais», comprenant une ou plusieurs base(s) de données, et qui peut (peuvent) être configurée(s) pour fournir des informations diverses à la plateforme de gestion 101, notamment encore par l'intermédiaire du réseau de communication 100. Ces informations peuvent concerner, sans que les exemples suivants soient limitatifs, des données météorologiques, des données de trafic routier, la survenue d'événements qui sont sélectionnés par un filtre prédéterminé, etc.

Dans un ou plusieurs modes de réalisation, le dispositif 1 est en liaison de communication de données avec la plateforme de gestion 101, par exemple au moyen d'une API appropriée, et la plateforme de gestion 101 est en liaison de communication de données avec chacune des plateformes 110-112, 200 et avec celles des capteurs 120-122, au moyen d'autres interfaces de programmation applicatives appropriées.

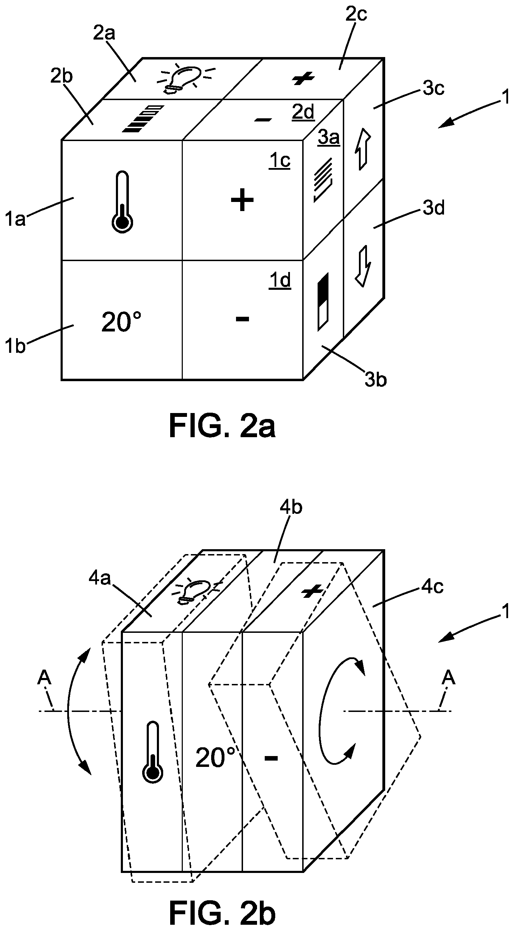

En référence au mode de réalisation de la figure 2a, le dispositif 1 peut avoir la forme d'un cube, dont chacune des six faces est affectée à la commande d'un type d'appareil. Par exemple, la face frontale du dispositif 1 tel que représenté à la figure 2a peut être affectée à la commande d'appareils de régulation de température, parmi lesquels le climatiseur 11, la face supérieure peut être affectée à la commande d'appareils d'éclairage, parmi lesquels le lampadaire 12, et la face tournée vers la droite peut être affectée à la commande d'appareils d'occultation, parmi lesquels le volet roulant 10. Eventuellement, deux faces différentes du dispositif 1 peuvent être affectées à deux fonctions différentes d'un même appareil, telles que la température de chauffage et le débit de soufflage du climatiseur 11.

Dans le mode de réalisation de la figure 2a, chacune des faces du dispositif 1 est divisée en quatre parties de face, qui sont donc juxtaposées dans la face considérée. L'une de ces parties de face peut être dédiée à l'indication du type d'appareil qui est concerné par la face, et au moins une autre de ces parties de face peut être dédiée à l'indication d'une instruction de commande qui est proposée pour les appareils du type concerné par la face. Par exemple, pour la face frontale du dispositif 1 de la figure 2a, la partie de face la indique le type des appareils de climatisation, la partie de face le indique une action d'augmentation de la température de consigne, et la partie de face 1d indique une action de diminution de la température de consigne. Ainsi, une activation de la partie de face le par un utilisateur du dispositif 1 correspond à une instruction de commande d'augmentation de la température. L'instruction de commande qui est ainsi mise en œuvre résulte de la combinaison de l'indication de la partie de face la, qui a été appelée élément d'instruction de commande de type thème de la partie générale de la présente description, avec l'indication de la partie de face le, qui a été appelée élément d'instruction de commande de type action. Similairement, une activation de la partie de face 1d par l'utilisateur correspond à une instruction de commande de diminution de la température. Cette autre instruction de commande résulte de la combinaison de l'élément d'instruction de commande de type thème de la partie de face 1a, avec l'élément d'instruction de commande de type action de la partie de face 1d. L'utilisation de la partie de face 1b, par exemple pour indiquer la température de consigne actuelle, est optionnelle.

De façon similaire, la partie de face 2a indique l'éclairage en tant qu'élément d'instruction de commande de type thème, les parties de face 2c et 2d indiquent des éléments d'instruction de commande de type action, respectivement d'augmenter et de diminuer l'intensité d'éclairage, et la partie de face 1b peut indiquer optionnellement une intensité d'éclairage actuelle, par exemple sous forme d'une échelle à plusieurs niveaux. La juxtaposition des indications des parties de face la et le, au sein de la même face du cube, constitue l'instruction de commande d'augmentation de l'intensité d'éclairage, et l'activation de la partie de face 2c par l'utilisateur du dispositif 1 correspond à une commande d'augmentation de l'éclairage. De même, la juxtaposition des indications des parties de face la et 1d, encore au sein de la même face du cube, constitue l'instruction de commande de diminution de l'intensité d'éclairage, et l'activation de la partie de face 2d par l'utilisateur correspond à une commande de diminution de l'éclairage.

Encore de même, la partie de face 3a indique le volet roulant 10 en tant qu'élément d'instruction de commande de type thème, les parties de face 3c et 3d indiquent des éléments d'instruction de commande de type action, respectivement de remonter et de baisser le volet roulant 10, et la partie de face 3b peut indiquer optionnellement le niveau de hauteur actuel du volet roulant. L'utilisation de cette autre face du dispositif 1 pour commander un fonctionnement du volet roulant 10 est similaire à celle des deux autres faces décrites précédemment.

L'activation d'une instruction de commande par l'utilisateur du dispositif 1, par exemple en touchant l'une des parties de face comme indiqué ci-dessus, peut être détectée par un capteur tactile qui est incorporé dans cette partie de face. Un tel capteur tactile peut être du type capteur de pression ou capteur électrostatique. Il constitue, avec son contrôleur, le module d'interface d'entrée qui a été introduit dans la partie générale de la présente description. Pour identifier celle des faces du dispositif 1 qui correspond à l'instruction de commande qui est activée volontairement par l'utilisateur, par rapport aux instructions de commande qui n'ont pas été sélectionnées par l'utilisateur mais qui sont inscrites sur d'autres faces du dispositif 1 que l'utilisateur peut toucher involontairement, l'activation de l'instruction de commande sélectionnée peut être effectuée par l'utilisateur sous forme d'un contact tactile qui est répété rapidement. Ainsi, le mode d'activation de l'instruction de commande qui est voulue par l'utilisateur permet au dispositif 1 d'identifier sans ambiguïté celle de ses faces sur laquelle cette instruction de commande est inscrite. Cette face a été appelée face active dans la partie générale de la description. D'autres méthodes pour identifier la face active peuvent être utilisées alternativement, notamment lorsque le module d'interface d'entrée du dispositif 1 est pourvu d'un accéléromètre. En effet, un tel accéléromètre peut permettre de repérer la face active, qui est regardée par l'utilisateur, en détectant un déplacement du dispositif 1 qui est effectué par l'utilisateur pour le rapprocher de lui. Alternativement encore, la face active peut être identifiée par un contact tactile de l'utilisateur sur la partie de face 1b pour désigner la face frontale du dispositif 1 comme face active, ou sur la partie de face 2b pour désigner la face supérieure du dispositif 1 comme face active, ou sur la partie de face 3b pour désigner la face du dispositif 1 qui est tournée à droite comme face active, etc.

De préférence, chaque élément d'instruction de commande peut être inscrit sur chaque partie de face du dispositif 1 de façon modifiable. Pour cela, chaque partie de face peut être munie d'un afficheur qui est commandé de façon appropriée, comme décrit plus loin. Un tel afficheur peut être du type à encre électronique, avantageux pour la très faible consommation d'énergie qu'il provoque, ou du type à diodes électroluminescentes, ou LED, avantageux pour le contraste élevé d'affichage qu'il produit. Alternativement, chaque afficheur peut être du type à picots rétractables, adapté pour inscrire en braille l'élément d'instruction de commande dans chaque partie de face.

Lorsque le dispositif 1 est en état de veille, les parties de face qui sont affectées aux éléments d'instruction de commande du type action peuvent être éteintes, et celles qui sont affectées à afficher les valeurs réelles de paramètres ambiants ou les valeurs de consigne actuelles des appareils, telles que les parties de face 1b, 2b et 3b, peuvent être maintenues actives. Elles peuvent alors être affectées pour afficher les valeurs ambiantes actuelles des paramètres concernés par le thème de la face. Dans ce cas, il peut être avantageux que les parties de face qui indiquent les éléments d'instructions de commande du type thème soient maintenues actives dans l'état de veille du dispositif, pour faciliter la compréhension des informations affichées par l'utilisateur.

Dans le mode de réalisation de la figure 2b, le dispositif 1 est composé d'au moins deux blocs mobiles, par exemple trois blocs mobiles 4a, 4b et 4c, qui peuvent tourner les uns par rapport aux autres autour d'un axe A-A. Les éléments d'instructions de commande sont inscrits sur celles des faces des blocs 4a et 4c qui sont combinées entre elles de façon variable dans une face du dispositif 1 par la rotation des blocs 4a et 4c. Le dispositif 1 peut encore avoir une forme générale cubique lorsque les blocs 4a-4c sont alignés en rotation pour définir une instruction de commande. Pour un tel mode de réalisation, le module d'interface d'entrée, qui permet à l'utilisateur d'activer une instruction de commande, est adapté pour déterminer les positions relatives des blocs 4a et 4c, afin d'identifier celles des faces de ces blocs, formant des parties de face du dispositif 1, qui sont combinées au sein d'une même face du dispositif. L'activation de l'une des instructions de commande qui est composée par l'utilisateur sur l'une des faces du dispositif 1, avec l'identification de cette face comme face active, peut être détectée de la même façon que pour le mode de réalisation de la figure 2a. Par exemple, chaque face du bloc mobile 4c peut être munie d'un capteur tactile séparé. Possiblement, le bloc 4a peut être dédié à afficher des éléments d'instructions de commande du type thème, et le bloc 4c peut être dédié à afficher des éléments d'instructions de commande du type action. Dans l'exemple représenté, la face frontale du bloc 4a indique la climatisation comme élément d'instruction de commande de type thème, et sa face supérieure indique l'éclairage comme élément d'instruction de commande alternatif de type thème. Simultanément, la face supérieure du bloc 4c indique une augmentation comme élément d'instruction de commande de type action, et sa face frontale indique une diminution comme élément d'instruction de commande alternatif de type action. La rotation d'un quart de tour du bloc 4c par rapport au bloc 4a permet donc à l'utilisateur de composer des instructions de commande selon toutes les combinaisons entre les thèmes du bloc 4a et les actions du bloc 4c.

Le bloc 4b du mode de réalisation de la figure 2b, optionnel, peut avoir la même fonction que les parties de face 1b, 2b et 3b du mode de réalisation de la figure 2a, lorsque le dispositif 1 est en cours d'utilisation et/ou lorsqu'il est dans l'état de veille.

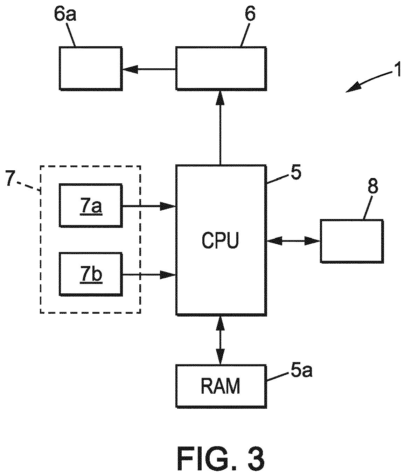

La figure 3 illustre différents modules fonctionnels d'un dispositif 1 tel que décrit en référence aux figures 2a et 2b. La référence 5 désigne un processeur, noté CPU, qui est couplé à une mémoire 5a, notée RAM, de façon à pouvoir lire et écrire dans cette dernière selon les besoins d'un fonctionnement du dispositif 1. Une sortie du processeur 5 est connectée à une entrée d'un module d'inscription 6, qui est lui-même connecté à des afficheurs 6a de façon à commander à ces derniers d'afficher des éléments d'instructions de commande qui sont transmis par le processeur 5. Les afficheurs 6a sont situés sur les parties de face du dispositif 1. Un module d'interface d'entrée 7 est connecté à une entrée du processeur 5, pour transmettre à ce dernier des signaux qui identifient des activations d'instruction de commande qui ont été saisies par l'utilisateur. Le module d'interface d'entrée 7 peut comprendre des capteurs tactiles 7a qui sont situés sur certaines au moins des parties de face du dispositif 1, et optionnellement un détecteur 7b qui est adapté pour identifier des positions relatives de blocs mobiles qui participent à former le dispositif 1, notamment dans le mode de réalisation de la figure 2b. Eventuellement, le module d'interface d'entrée 7 peut comprendre en outre un accéléromètre (non représenté), un microphone (non représenté) pour saisir des instructions verbales produites par l'utilisateur, etc. Le module de communication 8 est couplé au processeur 5, de façon à former une interface de communication de données entre ce dernier et la passerelle de service 102, ou directement avec le réseau 100. Enfin, le dispositif 1 peut comprendre en outre d'autres composants qui ne sont pas représentés, dont une batterie d'alimentation en énergie électrique, et optionnellement un haut-parleur, des composants de réglage du fonctionnement du dispositif 1 lui-même, etc.

Un procédé d'utilisation du dispositif 1 est maintenant décrit.

Le dispositif 1 peut être initialement dans un état de veille, et passe en état de fonctionnement actif par exemple lorsque l'un de ses capteurs tactiles détecte un contact avec l'utilisateur ou que l'accéléromètre détecte un déplacement du dispositif. Le processeur 10 peut alors établir une liaison de communication avec la plateforme de gestion 101, pour transmettre à celle-ci une requête de mise à jour des données qui concernent les appareils 10-12 susceptibles d'être télécommandés par l'utilisateur au moyen du dispositif 1. Ces données peuvent comprendre des valeurs de paramètres d'état des appareils 10-12, qui indiquent notamment l'état de fonctionnement en cours de chacun de ces appareils. Ces valeurs de paramètres d'état peuvent être transmises à la plateforme de gestion 101 par les plateformes 110-112 qui sont relatives à ces appareils, puis retransmises par la plateforme de gestion 101 au dispositif 1. Eventuellement, la plateforme de gestion 101 collecte aussi des données actualisées qui caractérisent un contexte existant dans le local où se trouve le dispositif 1. Ces données de contexte peuvent lui être transmises par au moins un des capteurs 120-122 et/ou la plateforme externe 200. Alors la plateforme de gestion 101 peut aussi transmettre ces données de contexte au dispositif 1, notamment en vue d'un affichage de certaines de ces données de contexte sur certaines des parties de faces de ce dispositif.

De préférence, la plateforme de gestion 101 collecte les valeurs des paramètres d'état des appareils 10-12, à partir des plateformes correspondantes 110-112, avec des possibilités de modification des fonctionnements de ces appareils. Alors la plateforme de gestion 101, en utilisant un programme approprié, peut sélectionner certaines des modifications possibles du fonctionnement de chaque appareil, en fonction de l'état de fonctionnement en cours de cet appareil et des données de contexte. De cette façon, seules des modifications de fonctionnement de l'appareil seront proposées à l'utilisateur, qui sont adaptées par rapport au contexte qui existe au moment où l'utilisateur a initié une utilisation du dispositif 1. Une telle sélection est appelée contextualisation dans le jargon de l'Homme du métier. Elle peut aussi prendre en compte l'heure actuelle, et optionnellement des habitudes de l'utilisateur qui ont pu être identifiées par un programme d'apprentissage. A partir de ces modifications possibles des fonctionnements des appareils 10-12, éventuellement triées par contextualisation, la plateforme de gestion 101 établit une affectation d'une instruction de commande qui correspond à chacune de ces modifications de fonctionnement, à l'une des faces du dispositif 1. Simultanément, elle affecte pour chaque instruction de commande, des éléments de cette instruction de commande aux parties de face de la face concernée. Une telle affectation peut relier chaque élément d'instruction de commande à une partie de face qui peut être désignée par un identifiant respectif. Des données de configuration qui représentent cette affectation sont alors transmises par la plateforme de gestion 101 au dispositif 1.

De façon générale pour l'utilisation d'un dispositif 1 conforme à l'invention, il peut être avantageux que certains au moins des éléments d'instructions de commande qui sont affectés aux parties de faces de ce dispositif 1, soient reçus par la plateforme de gestion 101 en provenance d'au moins une autre plateforme qui est relative à l'un des appareils, puis que ces éléments d'instructions de commande soient retransmis par la plateforme de gestion 101 au dispositif 1.

Le processeur 5 commande alors au module d'inscription 6 d'inscrire les éléments d'instructions de commande sur les parties de faces repérées par leurs identifiants, conformément aux données d'affectation reçues.

L'utilisateur active une des instructions de commande qui sont disponibles, et qui lui sont présentées par affichage sur les faces du dispositif 1, d'une des façons qui ont été décrites en référence aux figures 2a et 2b.

Pour le mode de réalisation de la figure 2b, le processeur 5 modifie l'affectation reçue entre identifiants de parties de faces et éléments d'instructions de commande, en fonction du déplacement des blocs mobiles qui est opéré par l'utilisateur. L'affectation modifiée détermine au moins une nouvelle instruction de commande qui est affichée et disponible pour être sélectionnée par l'utilisateur. Cette affectation modifiée est retournée par le dispositif 1 à la plateforme de gestion 101.

Le processeur 5 identifie alors les identifiants des parties de face qui correspondent aux éléments d'instruction de commande de l'instruction de commande qui a été activée par l'utilisateur. Ces identifiants des parties de face qui correspondent à l'instruction de commande activée sont alors transmis par le dispositif 1 à la plateforme 101. Cette dernière récupère l'instruction de commande qui a été activée, et peut la transmettre à celle(s) des plateformes 110-112 qui est (sont) dédiée(s) à l'appareil (aux appareils) concerné(s) par l'instruction de commande. Cette (ces) plateforme(s) déclenche(nt) une modification du fonctionnement de chaque appareil concerné conformément à l'instruction de commande.

Possiblement, la modification du fonctionnement d'un des appareils 10-12, telle qu'elle vient d'être décrite, peut être complétée par une mise-à-jour des instructions de commande qui sont proposées à l'utilisateur sur le dispositif 1. Par exemple, une augmentation de l'intensité d'éclairage qui vient d'être activée par l'utilisateur peut déclencher une proposition de baisser le volet roulant lorsqu'une heure nocturne est identifiée comme heure actuelle par la plateforme de gestion, parmi les données de contextualisation. Alors la plateforme de gestion 101 peut déterminer une nouvelle affectation d'éléments d'instructions de commande à inscrire sur les parties de faces du dispositif 1, en remplacement des précédentes. Elle envoie cette nouvelle affectation au dispositif 1, qui l'utilise pour actualiser l'affichage des éléments d'instructions de commande sur les parties de faces du dispositif 1, certains nouveaux éléments d'instructions de commande pouvant en remplacer d'autres préalablement affichés mais devenus moins pertinents. L'utilisateur peut alors activer une autre instruction de commande.

Il est entendu que l'invention peut être mise en œuvre en modifiant certains des aspects secondaires de celle-ci par rapport aux modes de réalisation qui ont été décrits en détail, mais tout en conservant certains au moins des avantages qui ont été cités. En particulier, la forme du dispositif peut être variée dans une large mesure, pour obtenir des formes autres qu'un cube ou un parallélépipède, avec des nombres de faces différents.

## Revendications

1. Dispositif (1), destiné à télécommander au moins un fonctionnement d'au moins un appareil (10-12), et comprenant :
- un processeur (5), couplé de manière opérationnelle à une mémoire (5a), le processeur étant adapté pour déterminer une instruction de commande de l'appareil (10-12) sur la base d'une combinaison de plusieurs éléments d'instruction de commande affichés sur une face du dispositif (1), par configuration de parties différentes de la face sur lesquelles sont respectivement inscrits les éléments d'instruction de commande, lesdites parties différentes de la face étant juxtaposées dans ladite face pour former la combinaison des éléments d'instruction de commande ;
- un module d'inscription (6), adapté pour inscrire, sous contrôle du processeur (5), les éléments d'instruction de commande sur les parties respectives de la face du dispositif (1) ;
- un module d'interface d'entrée (7), adapté pour recevoir des entrées d'un utilisateur, le module d'interface d'entrée comprenant un module de détection adapté pour détecter une activation de l'instruction de commande de l'appareil (10-12) par un utilisateur ; et
- un module de communication (8), adapté pour envoyer à une plateforme de gestion (101) par l'intermédiaire d'un réseau de communication (100), des données qui représentent l'instruction de commande activée par l'utilisateur,
le dispositif (1) comprenant plusieurs faces qui sont affectées respectivement à des types d'appareil distincts, à des appareils distincts (10-12) ou à des fonctions d'appareil distinctes, le dispositif étant en outre configuré pour présenter à l'utilisateur sur au moins une des faces au moins une instruction de commande relative au type d'appareil, à l'appareil ou la fonction d'appareil correspondant à ladite face, le module d'interface d'entrée (7) étant en outre adapté pour permettre à l'utilisateur d'activer l'instruction de commande de ladite face.

2. Dispositif (1) selon la revendication 1, dans laquelle le module de détection comprend au moins un capteur (7a) qui est disposé au niveau d'une des parties de face du dispositif sur laquelle partie de face est inscrit un des éléments d'instruction de commande, ledit capteur étant adapté pour détecter une action d'activation de l'instruction de commande qui est effectuée par l'utilisateur, et sur détection de l'action d'activation, en coopération avec le processeur (5), déclencher un envoi par le module de communication (8) à la plateforme de gestion (101), des données qui représentent l'instruction de commande activée par l'utilisateur.

3. Dispositif (1), destiné à télécommander au moins un fonctionnement d'au moins un appareil (10-12), et comprenant :
- un processeur (5), couplé de manière opérationnelle à une mémoire (5a), le processeur étant adapté pour déterminer une instruction de commande de l'appareil (10-12) sur la base d'une combinaison de plusieurs éléments d'instruction de commande affichés sur une face du dispositif (1), par configuration de parties différentes de la face sur lesquelles sont respectivement inscrits les éléments d'instruction de commande, lesdites parties différentes de la face étant juxtaposées dans ladite face pour former la combinaison des éléments d'instruction de commande ;
- un module d'inscription (6), adapté pour inscrire, sous contrôle du processeur (5), les éléments d'instruction de commande sur les parties respectives de la face du dispositif (1) ;
- un module d'interface d'entrée (7), adapté pour recevoir des entrées d'un utilisateur, le module d'interface d'entrée comprenant un module de détection adapté pour détecter une activation de l'instruction de commande de l'appareil (10-12) par un utilisateur ; et
- un module de communication (8), adapté pour envoyer à une plateforme de gestion (101) par l'intermédiaire d'un réseau de communication (100), des données qui représentent l'instruction de commande activée par l'utilisateur,
le dispositif (1) comprenant plusieurs blocs (4a-4c) dont l'un au moins est mobile par rapport à au moins un autre des blocs, et le bloc mobile comporte plusieurs faces qui forment chacune une partie de face distincte du dispositif, de sorte qu'un déplacement, par l'utilisateur, dudit bloc mobile par rapport à au moins un autre des blocs du dispositif modifie celles des parties de face qui sont juxtaposées pour déterminer l'instruction de commande,
et le module d'interface d'entrée (7) est adapté pour détecter les parties de face qui sont mises en juxtaposition par l'utilisateur pour sélectionner l'instruction de commande.

4. Dispositif (1) selon l'une quelconque des revendications précédentes, dans lequel au moins un des éléments d'instruction de commande, qui est inscrit sur une des parties de la face du dispositif, est de type thème et désigne un type d'appareil concerné par l'instruction de commande à laquelle participe ledit élément d'instruction de commande, et au moins un autre des éléments d'instruction de commande, qui est inscrit sur une autre des parties de ladite face du dispositif, est de type action et désigne une commande de fonctionnement d'au moins un appareil du type désigné par l'élément d'instruction de commande de type thème, au sein d'une même instruction de commande.

5. Dispositif (1) selon l'une quelconque des revendications précédentes, dans laquelle certaines au moins des parties de face du dispositif sont munies d'afficheurs (6a) respectifs, les afficheurs étant pilotés par le module d'inscription (6),
et dans lequel le module de communication (8) est en outre adapté pour recevoir, en provenance de la plateforme de gestion (101), des éléments d'instructions de commande qui sont disponibles pour être utilisés avec le dispositif (1),
et le module d'inscription (6) est en outre adapté pour inscrire certains au moins des éléments d'instructions de commande disponibles et reçus sur certaines au moins des parties de face qui sont munies d'afficheurs (6a), selon une affectation desdits éléments d'instructions de commande disponibles et reçus aux dites parties de face.

6. Dispositif (1) selon la revendication 5, dans lequel le module de communication (8) est adapté en outre pour recevoir, de la part de la plateforme de gestion (101), des données qui spécifient l'affectation de chaque élément d'instruction de commande disponible et reçu à une des parties de face du dispositif,
et les données qui représentent l'instruction de commande activée par l'utilisateur comprennent une identification de certaines au moins des parties de face qui correspondent, par l'affectation, aux éléments d'instruction de commande de l'instruction de commande activée par l'utilisateur.

7. Procédé de télécommande d'un fonctionnement d'au moins un appareil (10-12), le procédé comprenant les étapes suivantes, exécutées au moyen d'un dispositif (1) conforme à l'une quelconque des revendications précédentes:
/1/ établir une liaison de communication de données entre le dispositif (1) et une plateforme de gestion (101) ;
/2/ recevoir depuis la plateforme de gestion (101) des données de configuration de certaines au moins des parties de face du dispositif (1) en affectant des éléments d'instruction de commande aux dites parties de face ;
/3/ inscrire les éléments d'instruction de commande sur les parties de face auxquelles lesdits éléments d'instruction de commande sont affectés ;
/4/ recevoir une entrée de la part d'un utilisateur, et activer une instruction de commande qui apparaît sur une face du dispositif (1), dite face active, sur la base de l'entrée d'utilisateur reçue ; et
/5/ envoyer à la plateforme de gestion (101) des données qui représentent l'instruction de commande qui a été activée par l'utilisateur.

8. Procédé selon la revendication 7, suivant lequel le dispositif (1) est conforme à la revendication 3, et le procédé comprend en outre:
- recevoir, depuis la plateforme de gestion (101), les éléments d'instructions de commande à inscrire sur certaines au moins des parties de face qui sont munies d'afficheurs (6a) ; et
- inscrire sur lesdites parties de face qui sont munies d'afficheurs (6a), les éléments d'instruction de commande reçus de la plateforme de gestion (101).

9. Procédé selon la revendication 8, comprenant en outre, lorsqu'une utilisation en cours du dispositif (1) est détectée :
- inscrire sur au moins une partie de face qui est dans la face active, ou qui est susceptible d'être amenée dans la face active par l'utilisateur, un élément d'instruction de commande qui est disponible en remplacement d'un autre élément d'instruction de commande inscrit préalablement sur une partie de face de la face active.

10. Procédé selon l'une quelconque des revendications 7 à 9, suivant lequel :
l'activation de l'instruction de commande qui apparaît sur la face active comprend : déterminer une nouvelle instruction de commande à appliquer à l'appareil (10-12) sur la base d'une détection d'une modification, par l'utilisateur, de la combinaison d'éléments d'instruction de commande qui apparaît sur la face active du dispositif (1) ; et
l'envoi à la plateforme de gestion (101) des données qui représentent l'instruction de commande qui a été activée par l'utilisateur comprend : envoyer à la plateforme de gestion (101), des données qui représentent les éléments d'instruction de commande de la nouvelle instruction de commande.

## Patentansprüche

1. Vorrichtung (1), die zur Fernsteuerung mindestens eines Betriebs mindestens eines Geräts (10-12) bestimmt ist und enthält:
- einen operativ mit einem Speicher (5a) gekoppelten Prozessor (5), wobei der Prozessor geeignet ist, eine Steueranweisung des Geräts (10-12) auf der Basis einer Kombination mehrerer auf einer Seite der Vorrichtung (1) angezeigter Steueranweisungselemente durch Konfiguration verschiedener Teilbereiche der Seite, in denen die Steueranweisungselemente eingetragen sind, zu bestimmen, wobei die verschiedenen Teilbereiche der Seite auf der Seite nebeneinander angeordnet sind, um die Kombination der Steueranweisungselemente zu formen;
- ein Eintragemodul (6), das geeignet ist, unter der Kontrolle des Prozessors (5) die Steueranweisungselemente in die jeweiligen Teilbereiche der Seite der Vorrichtung (1) einzutragen;
- ein Eingabeschnittstellenmodul (7), das geeignet ist, Eingaben eines Benutzers zu empfangen, wobei das Eingabeschnittstellenmodul ein Erfassungsmodul enthält, das geeignet ist, eine Aktivierung der Steueranweisung des Geräts (10-12) durch einen Benutzer zu erfassen; und
- ein Kommunikationsmodul (8), das geeignet ist, an eine Verwaltungsplattform (101) mittels eines Kommunikationsnetzes (100) Daten zu schicken, die die vom Benutzer aktivierte Steueranweisung darstellen,
wobei die Vorrichtung (1) mehrere Seiten enthält, die unterschiedlichen Gerätetypen, unterschiedlichen Geräten (10-12) oder unterschiedlichen Gerätefunktionen zugewiesen sind, wobei die Vorrichtung außerdem konfiguriert ist, dem Benutzer auf mindestens einer der Seiten mindestens eine Steueranweisung bezüglich des Gerätetyps, des Geräts oder der Gerätefunktion entsprechend der Seite zu präsentieren, wobei das Eingabeschnittstellenmodul (7) außerdem geeignet ist, dem Benutzer zu erlauben, die Steueranweisung der Seite zu aktivieren.

2. Vorrichtung (1) nach Anspruch 1, wobei das Erfassungsmodul mindestens einen Sensor (7a) enthält, der im Bereich eines der Seiten-Teilbereiche der Vorrichtung angeordnet ist, auf welchem Seiten-Teilbereich eines der Steueranweisungselemente eingetragen ist, wobei der Sensor geeignet ist, eine Aktivierungsaktion der Steueranweisung zu erfassen, die vom Benutzer ausgeführt wird, und bei Erfassung der Aktivierungsaktion in Zusammenwirkung mit dem Prozessor (5) ein Schicken durch das Kommunikationsmodul (8) an die Verwaltungsplattform (101) der Daten auszulösen, die die vom Benutzer aktivierte Steueranweisung darstellen.

3. Vorrichtung (1), die dazu bestimmt ist, mindestens einen Betrieb mindestens eines Geräts (10-12) fernzusteuern, und die enthält:
- einen operativ mit einem Speicher (5a) gekoppelten Prozessor (5), wobei der Prozessor geeignet ist, eine Steueranweisung des Geräts (10-12) auf der Basis einer Kombination mehrerer auf einer Seite der Vorrichtung (1) angezeigter Steueranweisungselemente durch Konfiguration verschiedener Teilbereiche der Seite, in denen die Steueranweisungselemente eingetragen sind, zu bestimmen, wobei die verschiedenen Teilbereiche der Seite auf der Seite nebeneinander angeordnet sind, um die Kombination der Steueranweisungselemente zu formen;
- ein Eintragemodul (6), das geeignet ist, unter der Kontrolle des Prozessors (5) die Steueranweisungselemente in die jeweiligen Teilbereiche der Seite der Vorrichtung (1) einzutragen;
- ein Eingabeschnittstellenmodul (7), das geeignet ist, Eingaben eines Benutzers zu empfangen, wobei das Eingabeschnittstellenmodul ein Erfassungsmodul enthält, das geeignet ist, eine Aktivierung der Steueranweisung des Geräts (10-12) durch einen Benutzer zu erfassen; und
- ein Kommunikationsmodul (8), das geeignet ist, an eine Verwaltungsplattform (101) mittels eines Kommunikationsnetzes (100) Daten zu schicken, die die vom Benutzer aktivierte Steueranweisung darstellen,
wobei die Vorrichtung (1) mehrere Blöcke (4a-4c) enthält, von denen mindestens einer bezüglich mindestens eines anderen der Blöcke beweglich ist, und der bewegliche Block mehrere Seiten aufweist, die je einen unterschiedlichen Seiten-Teilbereich der Vorrichtung formen, damit eine Verschiebung, durch den Benutzer, des beweglichen Blocks bezüglich mindestens eines anderen der Blöcke der Vorrichtung diejenigen der Seiten-Teilbereiche verändert, die nebeneinander angeordnet sind, um die Steueranweisung zu bestimmen,
und das Eingabeschnittstellenmodul (7) geeignet ist, die Seiten-Teilbereiche zu erfassen, die vom Benutzer nebeneinander angeordnet werden, um die Steueranweisung auszuwählen.

4. Vorrichtung (1) nach einem der vorhergehenden Ansprüche, wobei mindestens eines der Steueranweisungselemente, das in einem der Teilbereiche der Seite der Vorrichtung eingetragen ist, vom Thementyp ist und einen Gerätetyp bezeichnet, der von der Steueranweisung betroffen ist, an der das Steueranweisungselement teilnimmt, und mindestens ein anderes der Steueranweisungselemente, das in einem anderen der Teilbereiche der Seite der Vorrichtung eingetragen ist, vom Aktionstyp ist und eine Betriebssteuerung mindestens eines Geräts des Typs bezeichnet, der vom Steueranweisungselement des Thementyps bezeichnet wird, innerhalb einer gleichen Steueranweisung.

5. Vorrichtung (1) nach einem der vorhergehenden Ansprüche, wobei mindestens bestimmte der Seiten-Teilbereiche der Vorrichtung mit Anzeigern (6a) versehen sind, wobei die Anzeiger vom Eintragemodul (6) gesteuert werden,
und wobei das Kommunikationsmodul (8) außerdem geeignet ist, von der Verwaltungsplattform (101) kommend Steueranweisungselemente zu empfangen, die verfügbar sind, um mit der Vorrichtung (1) verwendet zu werden, und das Eintragemodul (6) außerdem geeignet ist, mindestens bestimmte der verfügbaren und empfangenen Steueranweisungselemente in mindestens bestimmten der mit Anzeigern (6a) versehenen Seiten-Teilbereiche gemäß einer Zuweisung der verfügbaren und empfangenen Steueranweisungselemente zu den Seiten-Teilbereichen einzutragen.

6. Vorrichtung (1) nach Anspruch 5, wobei das Kommunikationsmodul (8) außerdem geeignet ist, von der Verwaltungsplattform (101) Daten zu empfangen, die die Zuweisung jedes verfügbaren und empfangenen Steueranweisungselements zu einem der Seiten-Teilbereiche der Vorrichtung spezifizieren,
und die Daten, die die vom Benutzer aktivierte Steueranweisung darstellen, eine Kennung mindestens bestimmter der Seiten-Teilbereiche enthalten, die durch die Zuweisung den Steueranweisungselementen der vom Benutzer aktivierten Steueranweisung entsprechen.

7. Verfahren zur Fernsteuerung eines Betriebs mindestens eines Geräts (10-12), wobei das Verfahren die folgenden Schritte enthält, die mittels einer Vorrichtung (1) nach einem der vorhergehenden Ansprüche ausgeführt werden:
/1/ Aufbau einer Verbindung zur Kommunikation von Daten zwischen der Vorrichtung (1) und einer Verwaltungsplattform (101);
/2/ Empfang von der Verwaltungsplattform (101) der Konfigurationsdaten mindestens bestimmter der Seiten-Teilbereiche der Vorrichtung (1), indem den Seiten-Teilbereichen Steueranweisungselemente zugewiesen werden;
/3/ Eintragen der Steueranweisungselemente in die Seiten-Teilbereiche, denen die Steueranweisungselemente zugewiesen sind;
/4/ Empfang einer Eingabe von einem Benutzer, und Aktivieren einer Steueranweisung, die auf einer Seite der Vorrichtung (1), aktive Seite genannt, erscheint, auf der Basis der empfangenen Benutzereingabe; und
/5/ Schicken an die Verwaltungsplattform (101) der Daten, die die Steueranweisung darstellen, die vom Benutzer aktiviert wurde.

8. Verfahren nach Anspruch 7, gemäß dem die Vorrichtung (1) Anspruch 3 entspricht, und das Verfahren außerdem enthält:
- Empfang, von der Verwaltungsplattform (101), der Steueranweisungselemente, die in mindestens bestimmte der Seiten-Teilbereiche einzutragen sind, die mit Anzeigern (6a) versehen sind; und
- Eintragen in die Seiten-Teilbereiche, die mit Anzeigern (6a) versehen sind, der von der Verwaltungsplattform (101) empfangenen Steueranweisungselemente.

9. Verfahren nach Anspruch 8, das außerdem enthält, wenn eine laufende Benutzung der Vorrichtung (1) erfasst wird:
- in mindestens einen Seiten-Teilbereich, der in der aktiven Seite ist oder der vom Benutzer in die aktive Seite gebracht werden kann, ein Steueranweisungselement einzutragen, das anstelle eines anderen Steueranweisungselements verfügbar ist, das vorher in einem Seiten-Teilbereich der aktiven Seite eingetragen war.

10. Verfahren nach einem der Ansprüche 7 bis 9, gemäß dem:
die Aktivierung der Steueranweisung, die auf der aktiven Seite erscheint, enthält: Bestimmen einer neuen Steueranweisung, die an das Gerät (10-12) auf der Basis einer Erfassung einer Veränderung, durch den Benutzer, der Kombination von Steueranweisungselementen anzuwenden ist, die auf der aktiven Seite der Vorrichtung (1) erscheint; und
das Schicken an die Verwaltungsplattform (101) der Daten, die die Steueranweisung darstellen, die vom Benutzer aktiviert wurde, enthält: Schicken an die Verwaltungsplattform (101) der Daten, die die Steueranweisungselemente der neuen Steueranweisung darstellen.

## Claims

1. Device (1), intended to remotely control at least one operation of at least one appliance (10-12), and comprising:
- a processor (5), operationally coupled to a memory (5a), the processor being adapted to determine a control instruction for the appliance (10-12) on the basis of a combination of a plurality of control instruction elements displayed on a face of the device (1), by configuring different parts of the face on which the control instruction elements are respectively inscribed, said different parts of the face being juxtaposed in said face so as to form the combination of the control instruction elements;
- an inscription module (6), adapted to inscribe, under the control of the processor (5), the control instruction elements on the respective parts of the face of the device (1);
- an input interface module (7), adapted to receive inputs from a user, the input interface module comprising a detection module adapted to detect activation of the control instruction for the appliance (10-12) by a user; and
- a communication module (8), adapted to send, to a management platform (101) via a communication network (100), data that represent the control instruction activated by the user,
the device (1) comprising a plurality of faces that are assigned, respectively, to different appliance types, to different appliances (10-12) or to different appliance functions, the device furthermore being configured to present to the user, on at least one of the faces, at least one control instruction relating to the appliance type, to the appliance or the appliance function corresponding to said face, the input interface module (7) furthermore being adapted to allow the user to activate the control instruction from said face.

2. Device (1) according to Claim 1, wherein the detection module comprises at least one sensor (7a) that is arranged on one of the face parts of the device, on which face part one of the control instruction elements is inscribed, said sensor being adapted to detect an activation action for activating the control instruction that is performed by the user and, upon detecting the activation action, in cooperation with the processor (5), to trigger sending, by the communication module (8) to the management platform (101), of the data that represent the control instruction activated by the user.

3. Device (1), intended to remotely control at least one operation of at least one appliance (10-12), and comprising:
- a processor (5), operationally coupled to a memory (5a), the processor being adapted to determine a control instruction for the appliance (10-12) on the basis of a combination of a plurality of control instruction elements displayed on a face of the device (1), by configuring different parts of the face on which the control instruction elements are respectively inscribed, said different parts of the face being juxtaposed in said face so as to form the combination of the control instruction elements;
- an inscription module (6), adapted to inscribe, under the control of the processor (5), the control instruction elements on the respective parts of the face of the device (1);
- an input interface module (7), adapted to receive inputs from a user, the input interface module comprising a detection module adapted to detect activation of the control instruction for the appliance (10-12) by a user; and
- a communication module (8), adapted to send, to a management platform (101) via a communication network (100), data that represent the control instruction activated by the user,
the device (1) comprising a plurality of blocks (4a-4c) at least one of which is mobile with respect to at least one other of the blocks, and the mobile block comprises a plurality of faces that each form a separate face part of the device, such that movement, by the user, of said mobile block with respect to at least one other of the blocks of the device modifies those face parts that are juxtaposed so as to determine the control instruction, and the input interface module (7) is adapted to detect the face parts that are juxtaposed by the user so as to select the control instruction.

4. Device (1) according to any one of the preceding claims, wherein at least one of the control instruction elements, which is inscribed on one of the parts of the face of the device, is thematic, and designates an appliance type affected by the control instruction in which said control instruction element participates, and at least one other of the control instruction elements, which is inscribed on another of the parts of said face of the device, is of action type and designates an operation command for at least one appliance of the type designated by the thematic control instruction element, in one and the same control instruction.

5. Device (1) according to any one of the preceding claims, wherein at least some of the face parts of the device are provided with respective indicators (6a), the indicators being driven by the inscription module (6), and wherein the communication module (8) is also adapted to receive, from the management platform (101), control instruction elements that are available to be used with the device (1),
and the inscription module (6) is furthermore adapted to inscribe at least some of the available and received control instruction elements on at least some of the face parts that are provided with indicators (6a), according to an assignment of said available and received control instruction elements to said face parts.

6. Device (1) according to Claim 5, wherein the communication module (8) is furthermore adapted to receive, from the management platform (101), data that specify the assignment of each available and received control instruction element to one of the face parts of the device,
and the data that represent the control instruction activated by the user comprise an identification of at least some of the face parts that correspond, through the assignment, to the control instruction elements of the control instruction activated by the user.

7. Method for remotely controlling an operation of at least one appliance (10-12), the method comprising the following steps, executed by way of a device (1) according to any one of the preceding claims:
/1/ establishing a data communication link between the device (1) and a management platform (101);
/2/ receiving, from the management platform (101), data for configuring at least some of the face parts of the device (1) by assigning control instruction elements to said face parts;
/3/ inscribing the control instruction elements on the face parts to which said control instruction elements are assigned;
/4/ receiving an input from a user, and activating a control instruction that appears on a face of the device (1), called active face, on the basis of the received user input; and
/5/ sending, to the management platform (101), data that represent the control instruction that has been activated by the user.

8. Method according to Claim 7, according to which the device (1) is in accordance with Claim 3, and the method furthermore comprises:
- receiving, from the management platform (101), the control instruction elements to be inscribed on at least some of the face parts that are provided with indicators (6a); and
- inscribing, on said face parts that are provided with indicators (6a), the control instruction elements received from the management platform (101) .

9. Method according to Claim 8, furthermore comprising, when current use of the device (1) is detected:
- inscribing, on at least one face part that is in the active face, or that can be brought into the active face by the user, a control instruction element that is available as replacement for another control instruction element previously inscribed on a face part of the active face.

10. Method according to any one of Claims 7 to 9, according to which:
the activation of the control instruction that appears on the active face comprises:
determining a new control instruction to be applied to the appliance (10-12) on the basis of detection of a modification, by the user, of the combination of control instruction elements that appears on the active face of the device (1); and
the sending, to the management platform (101), of the data that represent the control instruction that has been activated by the user comprises: sending, to the management platform (101), data that represent the control instruction elements of the new control instruction.
